# EUROPEAN PATENT APPLICATION

(11) **EP 0 860 908 A1**
(43) Date of publication of application: **26.08.1998**
(21) Application number: 97935857.9
(22) Date of filing: 22.08.1997
(51) Int. Cl.: H01R 17/04

(54) **CAR BATTERY PLUG**

(30) Priority: 28.08.1996 JP 243984/96
(71) Applicant: MITSUBISHI CORPORATION, Chiyoda-ku Tokyo 100 (JP)
(72) Inventor: YOKOZAWA, Hiroshi, Shinagawa-ku, Tokyo 142 (JP)
(74) Representative: Howden, Christopher Andrew
(86) International application number: JP9702919
(87) International publication number: WO9809351

(57) **Abstract**

A car battery plug which can be inserted into and connected to either cigar lighter socket regardless of their bore diameter sizes with an appropriate holding force without adjusting the protruded amount of a plate spring contacting piece (17) in advance in accordance with the bore diameter of the cigar lighter socket. On the side face of a slider (25) which slides in a plug housing (2), stepwise first and second stages (25a and 25b) and a slope are formed. When the contacting position where the folded end section of the piece (17) comes into contact with the slider (25) is on the first stage (25a), the contacting section (17a) of the piece (17) is largely protruded from an opening hole (19) and inserted into the large-diameter cigar lighter socket (111). When the car battery plug is inserted into the small-diameter cigar lighter socket (112), the contacting piece (17) is bent inward and comes into contact with the slope and the slider (25) slides, with the sliding position of the slider (25) being moved to the second stage (25b) from the first stage (25a). When the contacting position is on the second stage (25b), the contacting section (17a) is retreated inward and inserted into the small-diameter cigar lighter socket (112). Since the sliding position is usually maintained on the first stage (25a) by means of a coil spring (29), the car battery plug can be connected to either cigar lighter socket unconsciously of the bore diameter of the socket.

## Description

### FIELD OF THE INVENTION

The present invention relates to an automotive battery plug that is fitted into an automotive cigar lighter socket and electrically connected thereto to supply power to portable equipment carried in a motor vehicle and, more particularly, to an automotive battery plug that can sufficiently be retained in any of cigar lighter sockets of different diameters mounted, for example, in European, Japanese and U.S. cars.

### DESCRIPTION OF THE PRIOR ART

In recent years a lot of in-car electrical equipment, such as navigation equipment and communication equipment, have been commercially manufactured, and at the same time, car battery plugs have come into wide use to derive power from vehicle-mounted cigar lighter sockets for supply to the equipment.

While the cigar lighter sockets are powered in the same way anywhere in the world, they differ in diameter between Europe and Japan or the United States; namely, the sockets in European cars have an inner diameter in the range of 22.0 to 22.3 mm, whereas the sockets in Japanese or U.S. cars have a little smaller inner diameter of 20.8 to 21.1 mm. Consequently, a battery plug adapted for the Japanese or U.S. car can readily come off the cigar lighter socket in the European cars, whereas a battery plug for the European car is difficult to fit into a cigar lighter socket in the Japanese or U.S. car.

Accordingly, it was necessary in the past to prepare car battery plugs of different outer diameters each specified for a particular destination--this inevitably increases the number of parts used and involves cumbersome product control.

In view of the above, the inventor(s) of this application proposed in a Japanese utility model registration application (laid open under No. 5-69879) an automotive battery plug that is fitted into the cigar lighter socket of either diameter and held therein with adequate mechanical retentive power by adjusting the protrusion of leaf-spring contact pieces through openings in opposite sides of the plug body with the use of a slider slidably received therein.

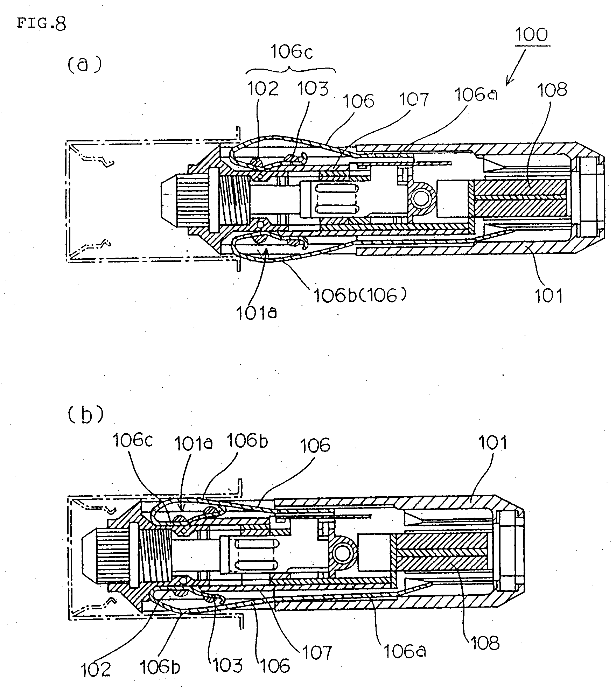

Figs. 7 and 8 are diagrammatic showings of the above-mentioned automotive battery plug indicated generally by 100, which has a pair of leaf-spring contact pieces 106 mounted in a cylindrical plug body 101 along its opposite sides. Each leaf-spring contact piece 106 has its rear end 106a (at the right-hand side in the figures) fixed to a groove cut in the plug body 101 and its forward free end portion arcuately bowed or bent backward in a U-letter shape so that the outside contact portion 106b contiguous to the rear end 106a protrudes from the plug body 101 through an opening 101a. A return end portion 106c of the leaf-spring contact piece 106 has two stepped portions 102 and 103 in the plug body 101.

Reference numeral 107 denotes a slider disposed in the plug body 101 in a manner to be slidable lengthwise thereof (in its front-to-back direction). The slider 107 slides back and forth with fore-and-aft adjustments of a knob 108 integrally formed with the slider 107 at the rear end thereof.

When the adjustment knob 108 is moved forward as shown in Fig. 7(a), the slider 107 slides into contact with the underside of the stepped portion 102 of each return end portion 106c and hence urges it outward. Consequently, the contact portion 106b of either leaf-spring contact piece 106c further protrudes from the periphery of the plug body 101 through the opening 101a to a position suitable for fitting the battery plug 100 in a large-diameter cigar lighter socket 111.

Thus, as depicted in Fig. 7(b), the battery plug 100 is adaptable for use with the large-diameter cigar lighter socket 111 designed for European cars and, can be held therein with predetermined retentive force.

When the adjustment knob 108 is moved backward as depicted in Fig. 8(a), the slider 107 slides out of contact with the front stepped portion 102 and into contact with the underside of the rear stepped portion 103. In this instance, the contact portion 106b of the leaf-spring contact piece 106 retracts to a position suitable for fitting the battery plug 100 into a small-diameter cigar lighter socket 112.

Thus, as shown in Fig. 8(b), the battery plug 100 is adaptable to a small-diameter cigar lighter socket 112 designed for Japanese or U.S. cars, and can be fitted therein with predetermined retentive force.

As described above, according to the automotive battery plug 100, the protrusion of the leaf-spring contact piece 106 can be adjusted to both of the large- and small-diameter cigar lighter sockets by sliding the adjustment knob 108 from the outside. This relieves an auto-part manufacturer from a burden of fabricating battery plugs of different diameters according to their destinations.

In general, however, it is little known to average users that different countries have adopted different standardized socket sizes for cars manufactured therein. Hence, they would thrust the battery plug 100 into the cigar lighter sockets in their automobiles without paying any particular attention to socket diameters.

If the battery plug 100 has the protrusion of the leaf-spring contact pieces 106 set for the large-diameter cigar lighter socket although the counterpart socket is the small-diameter type, the insertion would fail as well as would require a considerable amount of force. Forced insertion would result in the leaf-spring contact pieces 106 being broken or damaged due to plastic deformation.

In contrast thereto, when the protrusion of the leaf-spring contact pieces 106 is set for the small-diameter socket although the socket used is of the large diameter, no sufficient contact pressure is provided between the contact pieces 106 and the socket, giving rise to the problem of a bad contact between the plug and the socket or insecure retention of the former in the latter.

Additionally, even if the user knows that the cigar lighter socket has a different diameter for each country, he will have to adjust the protrusion of the contact pieces 106 to the socket diameter through repeated attempts to insert the plug into the socket unless he does not know whether the socket, for example, in the Japanese car, is of the large or small diameter. In other words, the conventional battery plug involves cumbersome adjustment of the leaf-spring contact pieces 106 through manual control of the knob 108 according to the diameter of the counterpart cigar lighter socket.

### SUMMARY OF THE INVENTION

It is therefore an object of the present invention to provide an automotive battery plug that can easily be fitted into the cigar lighter socket of either the large or small diameter and stably held therein with adequate retentive force, without any need for preadjusting the protrusion of each leaf-spring contact piece to the diameter of the cigar lighter socket used.

Another object of the present invention is to provide an automotive battery plug that can readily be fitted into a small-diameter cigar lighter socket without damaging the leaf-spring contact pieces, even if their protrusion is set for insertion into a large-diameter cigar lighter socket.

Another object of the present invention is to provide an automotive battery plug which, even if a user does not know the diameter of the counterpart cigar lighter socket, enables him to insert thereinto the plug and provides a sufficient contact pressure between them and hence will not readily come off from the socket.

It is still another object of the present invention to provide an automotive battery plug which is free from the need for preadjusting the protrusion of each leaf-spring contact piece according to the diameter of the cigar lighter socket used.

The automotive battery plug according to the present invention comprises: at least a cylindrical plug body for insertion into a cigar lighter socket; a pair of leaf-spring contact pieces, each having its base fixed in the cylindrical plug body and its free end portion bent into a U-letter shape so that an outside contact portion extending from the base protrudes from the periphery of the plug body through an opening thereof and an inside return end portion lies in the plug body; and a slider disposed in the plug body in a manner to be slidable lengthwise thereof, for contact with the return end portion of each leaf-spring contact piece. By sliding the slider, the position of its contact with the return end portion is shifted to adjust the protrusion of the contact portion of each contact piece through the opening of the plug body. The slider has on its either side surface a pair of first and second stages contiguous to each other but of different heights and a slope.

When the return end portion of each leaf-spring contact piece rests on the slider at the first stage, the contact portion of the contact piece protrudes from the periphery of the plug body through its opening to a position suitable for fitting the battery plug into a large-diameter cigar lighter socket.

When the return end portion of each leaf-spring contact piece rests on the slider at the second stage, the contact portion of each contact piece protrudes from the periphery of the plug body through its opening to a position suitable for insertion into a small-diameter cigar lighter socket.

When the automotive battery plug is inserted into the small-diameter cigar lighter socket although the return end portion of the leaf-spring contact piece remains at the first stage on the slider, the contact piece is forced into the plug body by the marginal edge of an open end portion of the cigar lighter socket and pressed against the slope on either side of the slider. The slider is thus caused to slide, shifting the position of its contact with the return end portion of the leaf-spring contact piece from the first to the second stage.

As described above, when the return end portion of each leaf-spring contact piece rests on the slider at the first stage, the degree of protrusion of the contact portion is appropriate for the insertion of the battery plug into the large-diameter cigar lighter socket.

In this instance, when the battery plug is fitted into the large-diameter cigar lighter socket, the leaf-spring contact pieces will not greatly bend, and hence the slider will not move. Accordingly, the contact portions protrude through the openings while holding the return end portions on the slider at the first stage, and contact the interior of the socket with an appropriate contact pressure. This ensures stable engagement of the battery plug with the cigar lighter socket.

When the counterpart cigar lighter socket is the small-diameter type, the leaf-spring contact pieces are each greatly bent by the marginal edge of the open end of the socket body and pressed against the slope of the slider. The slider is thus forced to slide, shifting the position of its contact with the return end portion of each leaf-spring contact piece from the first to the second stage. At this time, the contact portion of the contact piece retracts and protrudes at a position suitable for insertion into the small-diameter cigar lighter socket, generating therein appropriate plug retentive force and hence preventing the plug from readily coming off.

By setting the slider to receive the return end portion of each leaf-spring contact piece at the first stage through the use of a knob or similar manually-operable means, the battery plug can be fitted into the cigar lighter socket and stably held therein irrespective of whether it is the large- or small-diameter type. Accordingly, the battery plug of the present invention enables its user to insert it into either of the large- and small-diameter cigar lighter sockets without taking into account the socket diameter and without preadjusting the protrusion of each leaf-spring contact piece according to the socket diameter.

Further, the battery plug of the present invention includes a coiled spring which is disposed in the plug body, for biasing the slider in the direction in which to shift the position of its contact with the return end portion of each leaf-spring contact piece from the second to the first stage, normally holding the return end portion in contact with the slider at the first stage.

Since the slider normally stays in contact with the return end portion at the first stage by the action of the coiled spring, the contact portion of each leaf-spring contact piece pronudes to the position suitable for insertion into the large-diameter cigar lighter socket.

When the battery plug in the normal state is inserted into the small-diameter cigar lighter socket, each leaf-spring contact piece forced into the socket body urges the slider to slide in the plug body against the action of the coiled spring, shifting the position of contact of the slider with the return end portion from the first to the second stage. As a result, the contact portion of each contact piece protrudes through the opening to the position suitable for insertion into the small-diameter cigar lighter socket. Pulling out the battery plug from the small-diameter socket, the slider slides by the action of the coiled spring, returning the position of its contact with the return end portion from the second to the first stage.

Thus, the protrusion of each contact portion is automatically adjusted for the insertion of the battery plug into the large-diameter cigar lighter socket. The battery plug of the present invention can be fitted into the cigar lighter socket of either diameter without involving any particular preadjustment.

Other objects, features and advantages of the present invention will become more apparent from the following description taken in conjunction with the accompanying drawings, in which like reference numerals designate the same elements.

### BRIEF DESCRIPTION OF THE DRAWINGS

Fig. 1 is a horizontal sectional view showing the automotive battery plug of the present invention in its normal state prior to insertion into a cigar lighter plug;
Fig. 2 is a longitudinal sectional view of the battery plug shown in Fig. 1;
Fig. 3 is a perspective view of a slider that is guided by a guide frame;
Fig. 4 is a horizontal sectional view depicting the principal part of the battery plug fitted in a large-diameter cigar lighter socket;
Fig. 5 is a horizontal sectional view depicting the principal part of the battery plug fitted in a small-diameter cigar lighter socket;
Fig. 6 is a horizontal sectional view showing the principal part of the battery plug when the slider has shifted the position of its contact with a return end portion of each leaf-spring contact piece from a first to a second stage;
Fig. 7(a) is a horizontal sectional view showing a conventional car battery plug adjusted for insertion into a large-diameter cigar lighter socket;
Fig. 7(b) is a horizontal sectional view showing the conventional battery plug when it is fitted in the large-diameter cigar lighter socket;
Fig. 8(a) is a horizontal sectional view showing the conventional car battery plug adjusted for insertion into a small-diameter cigar lighter socket; and
Fig. 8(b) is a horizontal sectional view showing the conventional battery plug when it is fitted in the small-diameter cigar lighter socket.

### DESCRIPTION OF THE PREFERRED EMBODIMENT

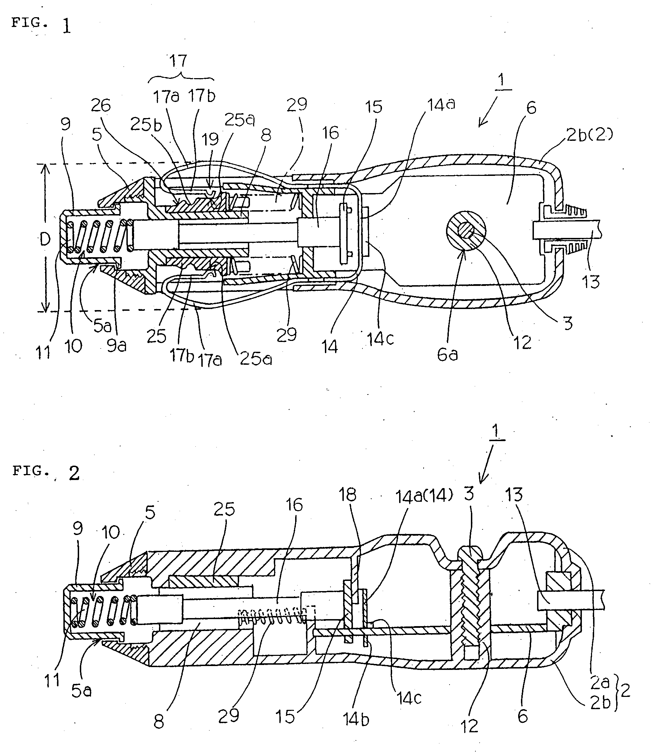

Referring first to Figs. 1 and 2, reference numeral 1 denotes generally a car battery plug according to an embodiment of the present invention, and 2 a plug body formed in one piece of an insulating synthetic resin material. As depicted in Fig. 2, the plug body 2 comprises a pair of molded upper and lower half shells 2a and 2b. These half shells 2a and 2b are joined together by screwing a tap bolt 3 into a tapped hole 4 of a boss 12 planted on or standing upright from the lower half shell 2b so that there is formed in the plug body 1a space where to place a fuse tube 16, a printed-circuit board 6 and so forth. The forward half portion of the plug body 2 is a portion that is inserted into a cigar lighter socket, and the rear half portion forms a grip of a little enlarged diameter.

Threadably attached to an opening in the tip of the forward portion of the plug body 2 is an insulating cap 5 molded of insulating synthetic resin. Since the insulating cap 5 is removable from the tip of the plug body 2, a fuse in the fuse tube 16, if burnt, could easily be replaced with a new one. The insulating cap 5 has a centrally-disposed cylindrical hole 5a which has an annular stepped portion formed in its inside wall surface over the entire circumference thereof. A head terminal 9 is retractably received in the cap 5a through the hole 5a.

The head terminal 9 has a cylindrical but hollow body made of a conductive metal, and a flange 9a at its rear end abuts the above-mentioned annular stepped portion to prevent the head terminal 9 from coming out of the hole 5a in the forward direction. The interior of the head terminal 9 forms a circular cross-section cavity, wherein the front end portion of a conductive coiled spring 11 is received.

The head terminal 9, which supports the conductive coiled spring 11, is inserted through the cylindrical hole 5a of the insulating cap 5 from behind and the flange 9a of the head terminal 9 abuts the annual stepped portion on the interior surface of the hole 5a, thereby preventing that the terminal head 9 comes off in the forward direction. With the flange 9a abutting the annual stepped portion, the head terminal 9 retractably extends out of the tip of the insulating cap 5 through its cylindrical hole 5a.

In the grip of the rear half portion of the plug body 2, there is disposed a printed-circuit board 6. The printed-circuit board 6 has its perimeter contoured following the inside surface of the lower half shell 2b, and has a centrally-disposed hole 6a. The printed-circuit board 6 is positioned relative to the lower half shell 2b of the plug body 2 by the afore-mentioned boss 12 that is inserted through the hole 6a. The boss 12 has the tapped hole 4 as depicted.

On the printed-circuit board 6 there are mounted a grounding contact 14 and a fixed terminal 15, which are electrically connected to a grounding lead and a power-supply lead (not shown) of a power cord 13 via patterns formed on the underside of the printed-circuit board 6.

The fixed terminal 15 is a conductive plate formed by stamping a sheet metal into a desired shape and subjecting it to simple bending. The fixed terminal 15 has a downward leg portion, which extends through the printed-circuit board 6 and is soldered to a power-supply pattern on the underside thereof. As depicted, the fuse tube 16 abuts against the fixed terminal 15 from the front, but a support piece 18 extending down from the upper half shell 2a of the plug body 2 supports the fixed terminal 15 on the back thereof to prevent it from falling rearward.

The fuse tube 16 is received in a guide frame 8 of a U-shaped cross-section, formed as a unitary structure with the lower half shell 2b, and is disposed in the plug body 2 lengthwise thereof. The conductive coiled spring 11 is held compressed by placing the fuse tube 15 between the fixed terminal 15 and the coiled spring 11.

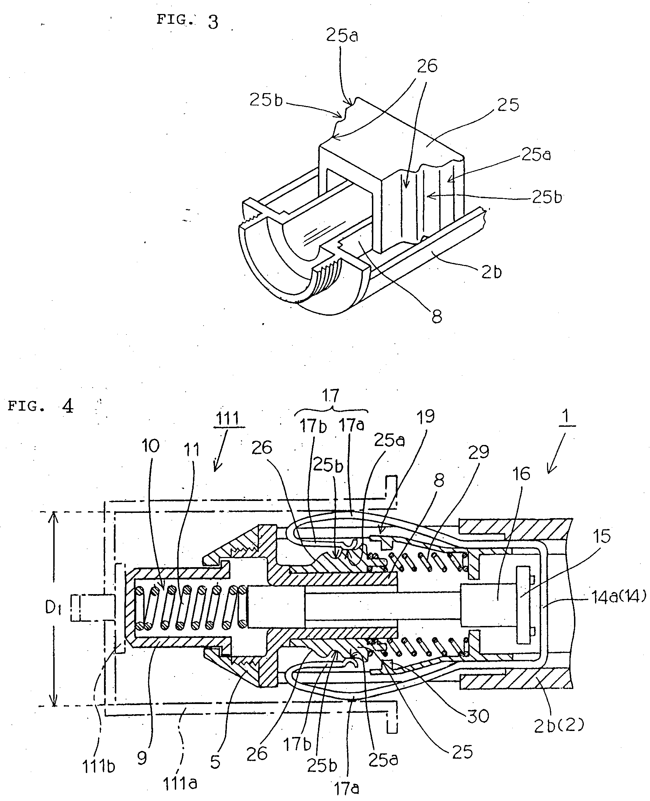

As depicted in Fig. 3, a slider 25 is mounted on the guide frame 8 in a manner to be slidable thereon in the lengthwise direction of the plug body 2. The slider 25 has on either side thereof an outward slope 26, a second stage 25b and a first stage 25a formed in this order in the rearward direction. A U-shaped groove contiguous to the slope 26 forms the second stage 25b and a flat portion jutting out behind it forms the first stage. The slider 25 is urged forward by a return spring 29 interposed between the rear end face of the slider 25 and the lower half shell 2b of the plug body 2 as shown in Figs. 1 and 2.

The grounding contact 14 is formed by bending a strip of conductive and resilient metal into substantially a U-letter shape as shown in Fig. 1, in which leaf-spring contact pieces 17 extend forward from opposite ends of its base portion 14a. The central portion of the lower side of the base portion 14a extends down through the printed-circuit board 6, and is soldered to a grounding pattern formed on the underside thereof. Thus, the grounding contact 14 is electrically connected via the grounding pattern to the grounding lead wire as referred to previously.

The remaining marginal portions of the lower side of the base portion 14a, except its downward extending central portion, are bent rearward at right angles to form a horizontal support piece 14c, supporting the base portion 14a upright on the printed-circuit board 6.

Each leaf-spring contact piece 17, in the form of an arcuately bowed spring, has a springy grounding contact portion 17a protruding from the periphery of the plug body 2 through an opening in either side thereof.

The free end portions of the leaf-spring contact pieces 17 bent backward in the plug body 2 form return end portions 17b. The free ends of the return end portions 17b each extend into the plug body 2 and resiliently contact one side surface of the slider 25. Since the slider 25 moves back and forth in the plug body 2, the position of contact (the position of sliding contact) of the free end of the return end portion 17b with the side surface of the slider 25 also shifts with its movement. As illustrated in Fig. 1, when the battery plug 1 is not fitted in the cigar lighter socket, the slider 25 is held at a position nearest to the front end of the guide frame 8 under the action of the return spring 29. In this instance, the return end portion 17b rests on the slider 25 at the first stage 25a.

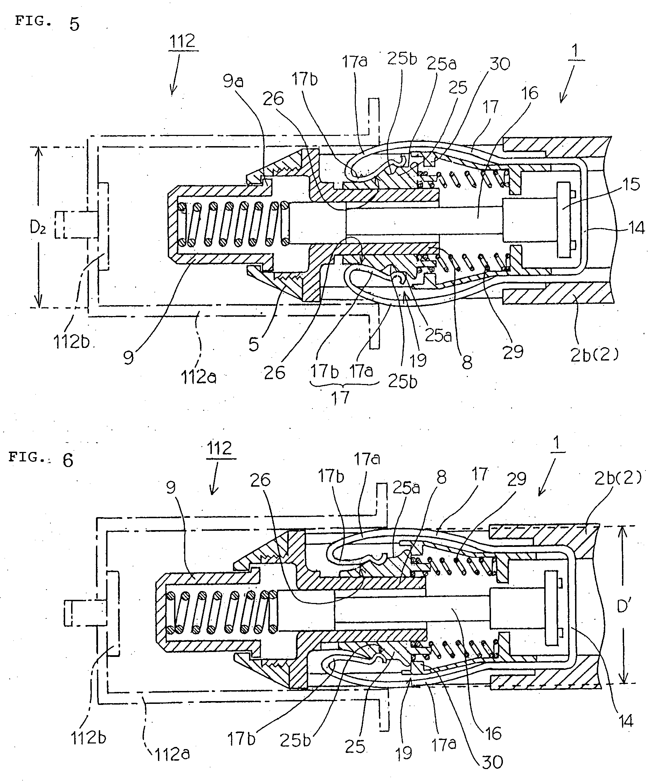

Turning next to Fig. 4, a description will be given of how the car battery plug 1 of the above construction will be fitted into and connected to a large-diameter cigar lighter socket identified by 111.

When the battery plug 1 is not fitted in the cigar lighter socket 111, the return end portion 17b of each leaf-spring contact piece 17 is in contact with the slider 25 at the first stage 25a on its flat side portion jutting outward. Hence, the contact portions 17a of the leaf-spring contact pieces 17 greatly protrude through the openings 19 and the distance D between the contact portions 17a is a little larger than the inner diameter D1 of the large-diameter cigar lighter socket 111 (see Figs. 1 and 4).

Thus, in this case, the battery plug 1 can be fitted into the large-diameter cigar lighter socket 111 with proper force. Once inserted into the socket 111, the battery plug 1 will not readily come out therefrom because the contact portions 17a resiliently contact a cylindrical grounding terminal 111a of the socket 111 with appropriate contact pressure. At this time, each leaf-spring contact piece 17 bends inward with the pressure of its resilient contact with the grounding terminal 111a, but will not bend into contact with the slider 25 at other positions than the first stage 25a. Consequently, the contact piece 17 remains in contact with the slider 25 at the first stage 25a.

As depicted in Figs. 1 and 4, the grounding terminal 111a is electrically connected to a grounding lead wire of the power cord 13 via the leaf-spring contact pieces 17, the base portion 14a of the grounding contact 14 and the grounding pattern of the printed-circuit board 6, but when the battery plug 1 is further pushed into the socket 111, the head terminal 9 is pressed into resilient contact with a power-supply terminal 111b formed on the inner end face of the socket 111. In consequence, the power-supply terminal 111b is electrically connected to a power-supply lead wire of the power cord 13 via the head terminal 9, the conductive coiled spring 11, the fuse tube 16, the fixed terminal 15 and the power-supply pattern formed on the printed-circuit board 6.

Since in this case the contact pieces 17a protrude through the openings 19 to such an extent as to produce adequate retentive force with which the battery plug 1 is retained in the large-diameter cigar lighter socket 111, it is possible to remove the former from the latter with proper force.

Referring next to Fig. 5, a description will be given of the case of inserting the battery plug 1 into a small-diameter cigar lighter socket 112.

When the battery plug 1 is not fitted in the cigar lighter socket 112, the leaf-spring contact pieces 17 are each in contact with the slider 25 at the first stage as is the case with the above. Hence, the distance D between the opposed contact portions 17a of the contact pieces 17 is appreciably larger than the inside diameter D2 of the small-diameter cigar lighter socket 112.

Accordingly, in this instance, when the battery plug 1 is inserted into the cigar lighter socket 112, the contact portions 17a are pressed inward by the marginal edge of the rear open end portion of a cylindrical grounding terminal 112a, thereby urging the return end portions 17b against the slopes 26 on both sides of the slider 25. Consequently, the slider 25 is forced to slide back (to the right in Fig.5) along the guide frame 8 against the spring action of the return spring 29.

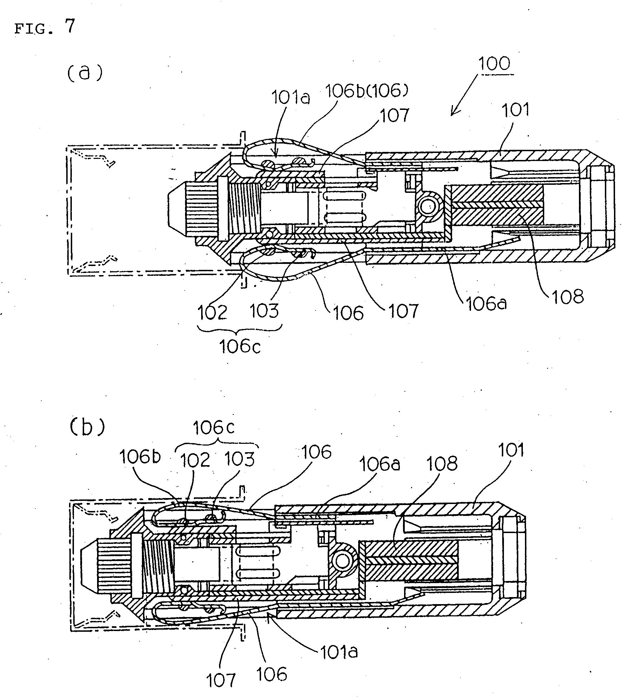

With the backward movement of the slider 25, the position of contact therewith of each return end portion 17b shifts from the first stage 25a to the second stage 25b of the lower level. Since the second stage 25b is formed by a U-shaped groove as referred previously, the free end of the return end portion 17b slides into the groove as shown in Fig. 6, and at the same time, the slider 25 abuts against a stopper 30 formed integrally with the lower half shell 25, and hence is positioned accordingly.

The contact portions 17a of the leaf-spring contact pieces 17 in this instance retract in the openings 19. The distance D' between the contact portions 17a is a little larger than the interior diameter D2 of the small-diameter cigar lighter socket 112.

Thus, the battery plug 1 can be inserted into the small-diameter cigar lighter socket 112 with proper force. Once fitted into the socket 112, the plug 1 will not easily come out therefrom since the contact portions 17a resiliently contact the cylindrical grounding terminal 112a of the socket 112 with appropriate contact pressure.

When the battery plug 1 is further pressed into the cigar lighter socket 112, the head terminal 9 is brought into resilient contact with a power-supply terminal 112b formed on the inner end face of the socket 112. The grounding terminal 112a comes into contact with the leaf-spring contact pieces 17, and is electrically connected to the grounding lead wire of the power cord 13. The power-supply terminal 112b is electrically connected to the power-supply lead wire of the power cord 13 via the head terminal 9.

Since in this case the contact pieces 17a protrude through the openings 19 to an extent as to produce adequate retentive force with which the battery plug 1 is retained in the small-diameter cigar lighter socket 112, no particularly large force is needed to remove the former from the latter.

When the battery plug 1 is pulled out of the cigar lighter socket 112, the leaf-spring contact pieces 17 go back to their normal positions by their own resiliency and the return end portions 17b held on the slopes 26 get out of contact with the slider 25. As the result of this, the slider 25 returns to the foremost position on the guide frame 8 under the action of the return spring 29, and the position of contact of each contact piece 17 with the slider 25 returns from the second stage 25b to the first one 25a. Hence, the battery plug 1 is restored to its initial state depicted in Fig. 1.

While in the above the return spring 29 has been described to be used to urge the slider 25 forward for automatic return to its initial position, the return means is not limited specifically to the coiled spring. For example, a knob operatively associated with the slider 25 may be used which is extended from the plug body 2 for manual operation to return the slider 25 to the original position. In the case of using such a slider returning means, it is necessary only to set the knob at the return position prior to the insertion of the battery plug 1 into the cigar light socket regardless of whether it is of the large or small diameter.

In the above embodiment the slider 25 is slid by urging the return end portions 17b of the leaf-spring contact pieces 17 against the slopes 26 on both sides of the slider 25. It is also possible, however, to employ a construction in which members formed integrally with the contact portions 17a on the inside thereof are pressed against the slopes 26 to slide the slider 25.

In the above embodiment the slider 25 is guided lengthwise of the plug body 2 by the U-shaped guide frame 8 formed integrally with the lower half shell 2b, but the slider 25 can be guided directly with the plug body 2 by forming the slider 25 so that its shape of projection in the front-to-back direction conforms to the inner wall surface of the plug body 2.

Additionally, the above embodiment uses the fuse tube 16, but it may be replaced with a chip fuse that is connected to the power-supply pattern of the printed-circuit board 6. In this case, the conductive coiled spring 11 is soldered to the power-supply pattern directly or via the fixed terminal 15.

As described above, the automotive battery plug according to the present invention is suitable for use as a car battery plug that is used to feed power to vehicle-mounted portable equipment.

It will be apparent that many modifications and variations may be effected without departing from the scope of the novel concepts of the present invention.

## Claims

1. An automotive battery plug comprising: a cylindrical plug body (2) for insertion into a cigar lighter socket; a pair of leaf-spring contact pieces (17) each having its base portion (14a) fixed in said cylindrical plug body (2) and its free end portion bent into a U-letter shape so that an outside contact portion (17a) extending from said base portion (14a) protrudes from the periphery of said plug body (2) through an opening (19) thereof and an inside return end portion (17b) lies in said plug body (2); and a slider disposed in said plug body (2) in a manner to be slidable lengthwise thereof, for contact with said return end portion (17b) of said each leaf-spring contact piece (17), said slider being slid to shift the position of its contact with said return end portion (17b) to thereby adjust the protrusion of said contact portion (17a) through said opening (19) and said slider having on its either side surface a pair of first and second stages (25a and 25b) of different heights and a slope (26);wherein when said return end portion (17b) of said each leaf-spring contact piece (17) is in contact with said slider at said first stage (25a), the protrusion of said contact portion (17) through said opening (19) is suitable for fitting said battery plug into a large-diameter cigar lighter socket (111); wherein when said return end portion (17b) of said each leaf-spring contact piece (17) is in contact with said slider at said second stage (25b), the protrusion of said contact portion (17) through said opening (19) is suitable for the fitting said battery plug into a small-diameter cigar lighter socket (112); and wherein when said automotive battery plug, with said return end portion (17b) held at said first stage (25a), is inserted into said small-diameter cigar lighter socket (112), said each leaf-spring contact piece (17) is forced into said plug body (2) by the marginal edge of an open end portion of said cigar lighter socket (112) and is pressed against said slope (26) on said either side of said slider (25), thereby sliding said slider (25) to shift said position of contact therewith of said return end portion (17b) from said first stage (25a) to said second stage (25b).

2. An automotive battery plug according to claim 1, further comprising a coiled spring (29) disposed in said plug body (2), for urging said slider (25) in a direction in which said position of contact therewith of said return end portion (17b) shifts from said second stage (25b) to said first stage (25a), thereby normally holding said return end portion (17b) at said first stage (25a).
